# EUROPEAN PATENT SPECIFICATION

(11) **EP 2 943 033 B1**
(45) Date of publication and mention of the grant of the patent: **03.01.2018**
(21) Application number: 14305674.5
(22) Date of filing: 08.05.2014
(51) Int. Cl.: H04W 76/02, H04W 72/12

(54) **Apparatuses, methods and computer programs for a mobile transceiver and a base station transceiver of a mobile communication system to configure resources for device-to-device, D2D, communications**
Vorrichtungen, Verfahren und Computerprogramme für mobile Geräte und eine Basisstation eines mobilen Kommunikationssystems um Ressourcen für direkte Kommunikationen zwischen mobilen Geräten zu konfigurieren
Appareils, procédés et programmes informatiques pour téléphones portables et au moins une station de base d'un système de communication mobiles pour l'établissement de ressources servant à la communication directe entre téléphones portables

(43) Date of publication of application: 11.11.2015
(73) Proprietor: ALCATEL LUCENT, 92100 Boulogne-Billancourt (FR)
(72) Inventor: Lim, Seau Sian, Swindon, Wiltshire SNS 7DJ (GB); Palat, Sudeep, Swindon, Wiltshire SNS 7DJ (GB)
(74) Representative: Menzietti, Domenico

(56) References cited:
- US-A1- 2009 181 676
- US-A1- 2011 106 952
- US-A1- 2013 223 356
- US-A1- 2013 322 413
- US-A1- 2014 078 952
- ZTE: "Out of coverage detection and service continuity", 3GPP DRAFT; R2-141486 - OUT OF COVERAGE DETECTION AND SERVICE CONTINUITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Valencia; 20140331 - 20140404 22 March 2014 (2014-03-22), XP050817859, Retrieved from the Internet: URL:http://www.3gpp.org/ftp/tsg_ran/WG2_RL 2/TSGR2_85bis/Docs/ [retrieved on 2014-03-22]

## Description

### Technical Field

Embodiments relate to apparatuses, methods and computer programs for a mobile transceiver and a base station transceiver of a mobile communication system, more particularly but not exclusively, to a concept for configuring radio resources for mobile device to mobile device communication.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The demands are growing for both directions of transmission, in the DownLink (DL) for transmission from the network infrastructure to a mobile transceiver, as well as in the UpLink (UL) for transmission from a mobile transceiver to the network infrastructure.

One aspect for improving service quality or service availability in mobile communication networks is Device-to-Device (D2D) communication, in which mobile transceivers or terminals may communicate payload data directly with each other without involving any communication of said payload with the network's infrastructure. For example, in standards the 3^{rd} Generation Partnership Project (3GPP) has approved a new work item in their Release-12 device-to-device proximity services. The main aim of the study is to devise feasible methods for D2D discovery and D2D communications for both public safety and non-public safety scenarios. Further details may be found in document RP-140518 of the 3GPP Technical Specification Group (TSG) Radio Access Network (RAN) meeting #63.

Document US 2013/0223356 A1 describe resources allocation mechanisms for device-to-device communication. An eNodeB uses at least one Physical Downlink Control Channel (PDCCH) to allocate resources to a device-to-device link. Document US 2013/0322413 describes a concept for controlling direct link communication in a cellular communication system using allocation of multiple Time Transmission Intervals (TTI). Document US 2014/0078952 A1 provides system, method and apparatus for initiation of inter-device communication in a wireless communication system using downlink or uplink resources of a Long Term Evolution (LTE) system. Document US 2011/0106952 A1 describes an apparatus for providing coordination of device to device communication, wherein a processor is configured to receive a resource allocation including an amount and a duration of resources to be used for the device to device communication in response to a request.

Otherwise, 3GPP discussions with regard to D2D standardisation in the context of LTE, considering in particular mode 1 and mode 2 resource allocation, in-coverage, out-of-coverage scenarios and detection of Radio Link Failure, RLF, in such context, is properly disclosed in contribution 3GPP R2-141486.

### Summary of illustrative Embodiments

The invention relates to an apparatus operable in a mobile transceiver according to claim 1, an apparatus operable in a base station transceiver according to claim 8, a method for device-to-device communications, D2D, of a mobile transceiver, and a method for configuring device-to-device, D2D, communications at a base station transceiver. A computer program having program code for, when executed, performing at least one of the methods of claims 13 and 14, is captured in claim 15. Preferred embodiments are provided in the dependent claims.

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.
Various embodiments provide apparatuses, methods and computer programs for a mobile transceiver and a base station transceiver of a mobile communication system. Embodiments may provide a concept for configuring D2D radio resources under control of a base station transceiver. A mobile transceiver may be configured with a temporary set of radio resources for D2D communication, such that the network may keep control over D2D resources and communication without monitoring the D2D-communicated data itself. Embodiments may provide a more efficient concept for D2D communication in a mobile communication system and embodiments may reduce a risk for mobile transceivers abusing D2D regulations.
Embodiments provide an apparatus operable in a mobile transceiver of a mobile communication system. The mobile transceiver apparatus comprises a transceiver module operable to communicate with another mobile transceiver and with a base station transceiver. The apparatus further comprises a control module, which is operable to control the transceiver module. The control module is further operable to receive configuration information relating to a temporary set of radio resources for communication with the other mobile transceiver from the base station transceiver. The temporary set of radio resources is valid during a limited time interval. The control module is further operable to configure the transceiver module to use at least a subset of the temporary set of radio resources to communicate with the other mobile transceiver during the time interval. Embodiments may improve network control for D2D communication as D2D communication resources are only valid for a limited time interval.
In further embodiments, the control module is further operable to receive information related to a beginning, a duration and/or an end of the time interval from the base station transceiver. Some embodiments may allow the network to define or control the time interval. In some embodiments the control module is further operable to operate the apparatus in an idle mode, in which there is no active communication context configured between the mobile transceiver and the base station transceiver, and in a connected mode, in which there is an active communication context configured between the mobile transceiver and the base station transceiver. The control module may then be operable to end the time interval when transiting from the active or connected mode to the idle mode. Alternatively, the control module may be operable to end the time interval independent from transiting from the active or connected mode to the idle mode and/or independent from a connection context between the mobile transceiver and the base station transceiver. Some embodiments may enable network control of the D2D resources by ending the time interval when a mobile transceiver enters an idle mode. Other embodiments may allow the mobile transceiver to use the D2D resources for the time interval, independent on whether the mobile transceiver enters idle mode and/or even independent from the mobile transceiver losing communication context with the network, such as, for example, during a radio link failure.

In some embodiments the control module may further be operable to control a time limited communication session with the other mobile transceiver. The control module may then be operable to provide information related to an end and/or a duration of the communication session to the base station transceiver. The control module may then be operable to end the time interval based on the end of the communication session or based on an indication from the base station transceiver in response to the information related to the end of the communication session. Embodiments may enable an adaption of the time interval to a duration of a D2D session and may enable more efficient control over D2D resources.

The control module may be further operable to provide information related to a request for extending the use of the temporary radio resources to the base station transceiver before the time interval ends, in case the communication session exceeds the time interval. Embodiments may enable efficient use of D2D resources by letting the mobile transceiver indicate when the validity time interval for the D2D resources is too short for a D2D communication session. In some embodiments the control module is further operable to provide information related to a request for the temporary radio resources to the base station transceiver before receiving the configuration information relating to the temporary set of radio resources for communication with the other mobile transceiver from the base station transceiver. Some embodiments may allow the network assigning D2D radio resources to a mobile transceiver after the mobile transceiver sent a request. Some embodiments may therewith assign D2D resources when a mobile transceiver has an active communication context with the network.

In some embodiments the control module may be further operable to receive information related to a quasi-stationary set of radio resources. The control module may be operable to configure the transceiver module to use at least a subset of the quasi-stationary set of radio resources to communicate with the other mobile transceiver before, during or after the time interval. Embodiments may configure an alternative set of radio resource with a longer validity duration than the above temporary set of radio resources, such that D2D communication may be enabled based on the quasi-stationary set of radio resources independent from the temporary resources. Embodiments may enable controlled D2D communication based on a quasi-stationary set of D2D resources, even if a mobile transceiver has no active communication context with the network.

Embodiments further provide an apparatus operable in a base station transceiver of a mobile communication system. The apparatus comprises a transceiver module operable to communicate with a mobile transceiver. The base station transceiver apparatus further comprises a control module, which is operable to control the transceiver module. The control module is further operable to provide configuration information relating to a temporary set of radio resources for communication between the mobile transceiver and another mobile transceiver. The temporary set of radio resources is valid during a limited time interval. The control module is operable to monitor the limited time interval. In line with the above, embodiments may provide improved network control for D2D communication, as D2D communication resources are only valid for a limited time interval.

The control module of the base station transceiver apparatus may be further operable to provide information related to a beginning, a duration and/or an end of the time interval to the mobile transceiver in some embodiments in line with the above. Additionally or alternatively, the control module of the base station transceiver apparatus may be further operable to receive information related to an end and/or a duration of a communication session between the mobile transceiver and another mobile transceiver from the mobile transceiver. The control module of the base station transceiver apparatus may be operable to end the time interval based on the end of the communication session. Some embodiments may allow the network to define or control the time interval, be it based on information provided from the infrastructure side or based on information provided from a mobile transceiver.

According to the above, in some embodiments the control module of the base station transceiver apparatus may be further operable to operate the mobile transceiver in an idle mode, in which there is no active communication context configured between the mobile transceiver and the base station transceiver, and in a connected mode, in which there is an active communication context configured between the mobile transceiver and the base station transceiver. The control module of the base station transceiver apparatus may be operable to end the time interval when transiting the mobile transceiver from the active or connected mode to the idle mode, or, additionally or alternatively, it may be operable to end the time interval after the duration independent from transiting from the active or connected mode to the idle mode and/or independent from a connection context between the mobile transceiver and the base station transceiver. Some embodiments may enable network control of the D2D resources by ending the time interval when a mobile transceiver enters an idle mode. Other embodiments may allow the mobile transceiver to use the D2D resources for the time interval, independent on whether the mobile transceiver enters idle mode and/or even independent from the mobile transceiver losing communication context with the network, such as, for example, during a radio link failure.

Further complying to the above, on the base station apparatus side, the control module may be further operable to receive information related to a request for extending the use of the temporary radio resources from the mobile transceiver. Additionally or alternatively, the control module may be operable to receive information related to a request for the temporary radio resources from the mobile transceiver before providing the configuration information relating to the temporary set of radio resources for communication with the other mobile transceiver to the mobile transceiver. Some embodiments may allow the network to assign D2D radio resources to a mobile transceiver after the mobile transceiver sent a request. Some embodiments may therewith assign D2D resources when a mobile transceiver has an active communication context with the network. Furthermore, in some embodiments the control module of the base station transceiver apparatus may be further operable to provide information related to a quasi-stationary set of radio resources to the mobile transceiver for communicating with the other mobile transceiver before, during or after the time interval. Embodiments may enable controlled D2D communication based on a quasi-stationary set of D2D resources, even if a mobile transceiver has no active communication context with the network.

Embodiments further provide a method for a mobile transceiver of a mobile communication system. The method comprises communicating with another mobile transceiver and communicating with a base station transceiver. The method further comprises receiving configuration information relating to a temporary set of radio resources for communication with the other mobile transceiver from the base station transceiver. The temporary set of radio resources is valid during a limited time interval. The method further comprises using at least a subset of the temporary set of radio resources to communicate with the other mobile transceiver during the time interval.

Embodiments further provide a method for a base station transceiver of a mobile communication system. The method comprises communicating with a mobile transceiver and providing configuration information relating to a temporary set of radio resources for communication between the mobile transceiver and another mobile transceiver. The temporary set of radio resources is valid during a limited time interval. The method further comprises monitoring the limited time interval.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for a mobile transceiver and an apparatus for a base station transceiver of a mobile communication system;
Fig. 2 shows message sequence chart of an embodiment;
Fig. 3 shows another message sequence chart of another embodiment;
Fig. 4 shows a block diagram of a flow chart of an embodiment of a method for a mobile transceiver of a mobile communication system; and
Fig. 5 shows a block diagram of a flow chart of an embodiment of a method for a base station transceiver of a mobile communication system.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

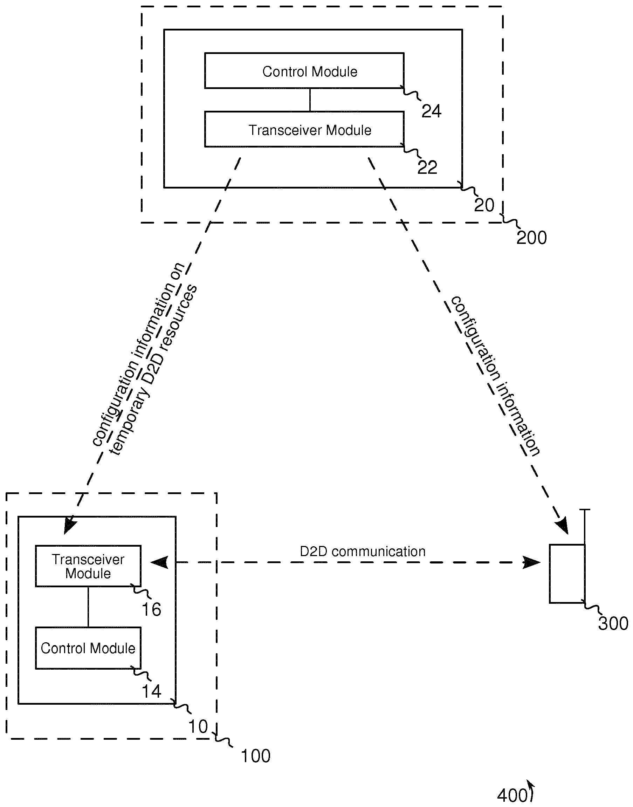

In the following some embodiments of apparatuses, methods and computer programs for a base station transceiver and a mobile transceiver will be described. Embodiments further provide a base station transceiver and a mobile transceiver comprising such respective apparatuses. Fig. 1 illustrates a block diagram of an embodiment of an apparatus 10 for or operable in a mobile transceiver 100 and an apparatus 20 for or operable in a base station transceiver 200 of a mobile communication system 400. The apparatus 10 is also referred to as mobile station apparatus 10; the apparatus 20 is also referred to as base station transceiver apparatus 20.

In general, the mobile communication system 400 may, for example, correspond to one of the Third Generation Partnership Project (3GPP)-standardized mobile communication networks, where the term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by or partly coincide with the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

As shown in Fig. 1 the apparatus 10 comprises a transceiver module 12, which is operable to communicate with another mobile transceiver 300 and with a base station transceiver 200. Fig. 1 further illustrates an embodiment of a mobile transceiver 100 comprising the apparatus 10 (shown in dashed lines as being optional). The transceiver module 12 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The apparatus 10 further comprises a control module 14, which is coupled to the transceiver module 12. The control module 14 is operable to control the transceiver module 12. The control module 14 is further operable to receive configuration information relating to a temporary set of radio resources for communication with the other mobile transceiver 300 from the base station transceiver 200. The temporary set of radio resources being valid during a limited time interval. The control module 14 is further operable to configure the transceiver module 12 to use at least a subset of the temporary set of radio resources to communicate with the other mobile transceiver 300 during the time interval.

In embodiments the control module 14 may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a micro-controller, etc.

The configuration information may correspond to any information or information element, which represents a configuration of or for a mobile transceiver with the set of temporary radio resources. For example, such information may be represented by one or more digital or binary values in compliance with a protocol defining such communication between the mobile transceiver 100 and the base station transceiver 200. The radio resources may correspond to any radio resources available in the respective mobile communication system 400. For example, the radio resources may comprise one or more elements of the group of time resources, e.g. one or more radio frames, radio sub-frames, slots, Time Transmission Intervals (TTIs), frequency resources, e.g. one or more carriers, sub-carriers, bands, sub-bands, spatial resources, e.g. spatial channels, spatial sub-channels, antenna beams, spatial precoding vector, power resources, e.g. a maximum transmission power, a power fraction, etc.

The validity of the temporary set of radio resources during the time interval may refer, for example, to a permission of the base station transceiver 200 issued to the mobile transceiver 100 to use said radio resources during the time interval to communicate with the other mobile transceiver. In other words, the mobile transceiver may not be allowed to use the set of temporary radio resources outside the time interval, i.e. before or after the time interval. The communication between the mobile transceiver 100 and the other mobile transceiver 300 may refer, at least in some embodiments, to a direct communication between the two mobile transceivers 100, 300 without any intermittent transceivers in between. In some embodiments, this D2D communication may involve an intermittent relay transceiver, e.g. yet another mobile transceiver relaying signals between the mobile transceiver 100 and the other mobile transceiver 300.

Hence, in some embodiments the communication between the mobile transceiver 100 and the other mobile transceiver 300 may be defined as a communication without involving the infrastructure of the mobile communication network 400, in particular without involving a base station transceiver. That is to say that in some embodiments the base station transceiver 200 would be unaware of the traffic content or the signals communicated between the two mobile transceivers 100, 300. In some embodiments, however, it is even conceivable that a D2D communication my even be relayed by a base station transceiver however, as such traffic or communication would be classified as D2D, the base station transceiver would react or relay such signals using a different protocol stack than for non-D2D traffic or communication, e.g. a reduced protocol stack only involving lower layers such as physical layer and medium access layer.

Fig. 1 further illustrates an embodiment of the base station transceiver apparatus 20. The apparatus 20 is operable in the base station transceiver 200 of a mobile communication system 400. Fig. 1 further depicts an embodiment of a base station transceiver 200 comprising the apparatus 20 (shown in dashed lines as being optional). The apparatus 20 comprises a transceiver module 22 operable to communicate with a mobile transceiver 100. The transceiver module 22 may be implemented accordingly with transceiver module 12; implementations may be adapted to the according application at a mobile transceiver 100 or at a base station transceiver 200, respectively. The base station transceiver apparatus further comprises a control module 24, which is operable to control the transceiver module 22 and which is coupled to the transceiver module 24. The control module 24 may be implemented accordingly with control module 14; implementations may be adapted to the according application at a mobile transceiver 100 or at a base station transceiver 200, respectively. The control module 24 is further operable to provide the configuration information relating to the temporary set of radio resources for communication between the mobile transceiver 100 and another mobile transceiver 300 to the mobile transceiver 100. The temporary set of radio resources is valid during the limited time interval. This is illustrated in Fig. 1 using the arrow pointing from transceiver module 22 to transceiver module 12 indicating configuration information on temporary D2D-resources being provided. The control module 24 is further operable to monitor the limited time interval.

As shown in Fig. 1 using the dashed arrow, optionally the base station transceiver apparatus 20 may be operable to provide configuration information also to the other mobile transceiver 300, which may also comprise an embodiment of the mobile transceiver apparatus 10. In other embodiments the other mobile transceiver may be configured by another base station transceiver or it may be pre-configured in any other way.

Embodiments may provide a configuration concept for controlled D2D communication. In principal, two modes of resource allocation for D2D transmission may be distinguished. In mode 1 a base station transceiver 200 (e.g. an eNodeB or an LTE Rel-10 relay node) may schedule exact resources used by a UE 100 to transmit direct data and direct control information. In mode 2 a UE 100 may select resources from resource pools to transmit direct data and direct control information on its own; such pool may be provided in embodiments as the temporary set of radio resources, i.e. in a temporary manner valid for a limited time interval.

It may further be assumed in embodiments, that if a UE 100 is out of coverage it may only use mode 2. If a UE 100 is in coverage it may use mode 2 if the eNB 200 configures it accordingly, with the temporary set of resources in embodiments. If a UE 100 is in coverage it may use mode 1 if the eNB configures it accordingly. In an embodiment, e.g. in an LTE or LTE-A scenario, a mobile transceiver 100 may be in an idle mode (non-active communication context with a base station) or a connected mode (active communication context with a base station), e.g. in terms of the Radio Resource Control protocol (RRC), i.e. in terms of whether an active RRC context is established or not. For UEs in idle mode a base station 200, e.g. an eNB, may provide a mode 2 transmission resource pool in a System Information Block (SIB). UEs 100 that are authorized for D2D may use these resources in idle mode. The base station 200, e.g. eNB, may indicate in SIB that it supports D2D but does not provide transmission resources. A UE 100 may need to enter RRC-connected mode in order to request D2D transmission resources. A UE 100 in connected mode may be authorized to perform D2D transmission and may indicate to the eNB 200 that it wants to perform D2D discovery transmissions. The eNB 200 may validate whether UE 100 is authorized for D2D transmission using the UE 100 context received from a Mobility Management Entity (MME). The eNB 200 may configure the UE 100 to use a mode 2 transmission resource pool or mode 1 transmission resources via dedicated signaling.

With mode 2 being used in RRC-connected mode, a UE 100 may be configured with the mode 2 transmission resource pool via dedicated RRC signaling, instead of from the SIB. The benefit of using dedicated RRC signaling to SIB to send the mode 2 transmission resource pool may be that a UE 100 may only be authorized to perform a D2D operation, when it is configured with the pool. With SIB, the network 200 might not have such control and the network may trust that only authorized UEs in idle mode or connected mode use the transmission resource pool. Since it is sent via dedicated RRC signaling, it is in the intention that such transmission resource pool are reconfigurable at some point in time (e.g. the pool size may change depending on the cellular load etc.). In order to allow for such reconfiguration, the UE 100 may stay in RRC connected mode. In embodiments such pool may have a limited temporary validity.

For example, in Rel-8 LTE, there is an inactivity timer running to check whether to keep a UE 100 in connected mode or idle mode. Once the inactivity timer expires, the network 200 may send the UE 100 to idle mode. The inactivity timer may be restarted whenever there is traffic activity. But with D2D mode 2 in general, the network might not know whether the UE 100 is performing D2D operation. Embodiments may therefore provide a mechanism to keep track of D2D activity for a UE 100 using mode 2 transmissions in terms of a temporarily assigned set of D2D resources.

Embodiments may further provide mechanisms to track whether a D2D UE 100 using configured mode 2 transmission resource pool is still performing D2D operation. Embodiments may provide mechanisms to assign mode 2 resources, e.g. preconfigured transmission resources or reconfigured transmission resources, for use by D2D UEs 100 that may be in or out coverage or transitioning between the two and to control the usage time, by means of temporarily assigned resources, of the reconfigured transmission resources by the D2D UE 100.

In some embodiments the control module 14 of the mobile transceiver apparatus 10 may be further operable to receive information related to a quasi-stationary set of radio resources. The control module 14 may be operable to configure the transceiver module 12 to use at least a subset of the quasi-stationary set of radio resources to communicate with the other mobile transceiver 300 before, during or after the time interval, for which the temporary set of radio resources is configured. Accordingly, the control module 24 of the base station transceiver apparatus 20 may be further operable to provide information related to a quasi-stationary set of radio resources to the mobile transceiver 100 for communicating with the other mobile transceiver 300 before, during or after the time interval. In other words the UE 100 may use a pre-configured transmission resource pool, in terms of the configured quasi-stationary set of radio resources valid for a longer term than the time interval, which may correspond to a minimum set. The UE 100 may also receive reconfigured resources, i.e. the temporary set of radio resources, on top of the preconfigured resources from the network 200, which may correspond to a maximum set.

In such an embodiment the UE 100 may be allowed to request for more transmission resources, when it is in coverage or the network 200 may be allowed to provide more transmission sources to the UE 100 when it is in coverage. The UE 100 may need to know when to use the preconfigured pool (minimum set, quasi-stationary) and when to use the reconfigured pool (maximum set, temporary set) and the UE 100 may inform the network 200, when it no longer needs to use the reconfigured pool, e.g. when it stops D2D transmissions, so that the network 200 can send the UE 100 to idle mode.

Moreover, in some embodiments the UE 100 may enter RRC-connected mode and inform the eNB 200 that it wants to perform a D2D operation. The eNB 200 may then verify that the UE 100 can perform D2D operation either via stored information or via the Core Network (CN). If the UE 100 is allowed to perform D2D operation, the eNB 200 may configure the mode 2 transmission resource pool (temporary set) to the UE 100.

In different embodiments there may be different mechanisms in place on how the time interval during which the temporary set of radio resources is valid is defined. In the mobile transceiver apparatus 10 the control module 14 may be further operable to receive or to provide (e.g. based on an expected duration of a D2D communication session) information related to a beginning, a duration and/or an end of the time interval from the base station transceiver 200. Accordingly, in the base station transceiver apparatus 20 the control module 24 may be further operable to provide information related to a beginning, a duration and/or an end of the time interval to the mobile transceiver 100. In other embodiments, the control module 24 may be further operable to receive information related to an end and/or a duration of a communication session between the mobile transceiver 100 and another mobile transceiver 300 from the mobile transceiver 100 and to end the time interval based on the end of the communication session.

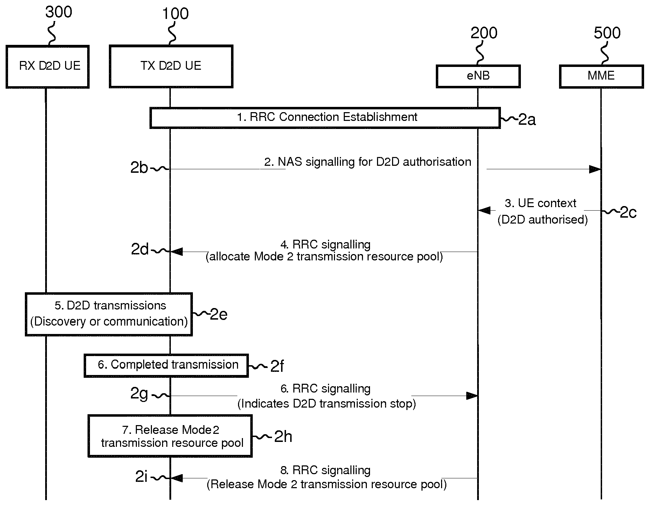

Fig. 2 illustrates a message sequence chart as used in an embodiment. Fig. 2 shows the other mobile transceiver 300 as a D2D receiver UE 300 (RX D2D UE) on the very left.

Next to the other UE 300 Fig. 2 shows the mobile transceiver 100 as the D2D transmitting UE 100 (TX D2D UE). Fig. 2 further shows an embodiment of a base station transceiver 200 implemented as eNB 200. The eNB 200 has a further connection to an MME 500. In a first step 2a RRC connection is established between the mobile transceiver 100 and the eNB 200. In step 2b Non Access Stratum (NAS) signaling is used for authorizing the UE 100 for D2D communication with MME 500. The MME 500 then authorizes D2D for the UE 100 to the eNB 200 in step 2c. The eNB200 then uses RRC signaling to allocate the mode 2 transmission resource pool (temporary set of radio resources) to the UE 100, which then uses said resources for communicating with the other UE 300 in step 2e. The connection with the other UE 300 may be established using a discovery mechanism, for example, in a random access manner. The D2D transmission may involve such discovery and payload communication. The D2D transmission is assumed to be completed in step 2f. The UE 100 the uses RRC signaling to inform the eNB 200 about the D2D transmissions being stopped or completed in step 2g.

In other words, in this embodiment the control module 14 on the UE 100 side is further operable to control a time limited communication session with the other mobile transceiver 300. The control module 14 of the UE 100 is operable to provide information related to an end, in other embodiments also possibly on the duration, of the communication session to the base station transceiver 200. The control module 14 may be further operable to end the time interval based on the end of the communication session, which is indicated in Fig. 2 by step 2h in which UE 100 releases the mode 2 transmission resource pool. In another embodiment the control module 14 may be further operable to end the time interval based on an indication from the base station transceiver 200 in response to the information related to the end of the communication session, which is indicated in Fig. 2 in 2i, where the eNB 200 uses RRC signaling again to signal the UE 100 to release the (temporary) mode 2 transmission resource pool.

In short the diagram of Fig. 2 shows an example signaling flow of an embodiment:
Step 2a: UE 100 enters RRC Connected via RRC Connection Establishment procedure,
Step 2b: UE 100 NAS sends a NAS signaling (D2D authorization) to the MME/CN 500,
Step 2c: MME/CN 500 sends the authorization information to the eNB 200,
Step 2d: eNB 200 configures the temporary mode 2 transmission resource pool to the UE 100,
Step 2e: UE 100 performs D2D operation,
Step 2f, 2g: Once UE 100 terminates the D2D operation, it informs the eNB 200 it no longer needs the temporary mode 2 transmission resource pool, and
Step 2h, 2i: UE 100 can either release the pool autonomously or wait for the eNB 200 to release the resource.

In this embodiment, upon being configured with the mode 2 temporary transmission resource pool 2d, the UE 100 is allowed to use the mode 2 temporary transmission resource pool for as long as it likes in RRC-connected mode. The network 200 ensures that the UE 100 is kept in RRC-connected mode and the temporary D2D resource is available for the UE 100 while it is in RRC-connected mode. When it has completed using the resources, the UE 100 informs the eNB 200 that it no longer wants to use it (i.e. D2D session has been terminated), step 2f in Fig. 2. The UE 100 may either autonomously release the transmission resource pool configuration or wait for the eNB 200 command to release the configuration.

In case when UE 100 is in bad coverage that cannot guarantee communication with the network 200, e.g. radio link failure, the UE 100 releases the transmission resource pool configuration provided by the network 200 and uses the predefined pool or quasi-stationary set of radio resources (if it is preconfigured with one). In other words, the control module 14 of the UE 100 may be further operable to operate the UE apparatus 10 in an idle mode, in which there is no active communication context configured between the mobile transceiver 100 and the base station transceiver 200 (e.g. RRC-idle), and in a connected mode, in which there is an active communication context configured between the mobile transceiver 100 and the base station transceiver 200 (e.g. RRC-connected). The control module 14 may then be operable to end the time interval when transiting from the active or connected mode to the idle mode, during radio link failure, respectively.

Correspondingly, the control module 24 at the eNB 200 may be further operable to operate the mobile transceiver 100 in the idle mode and in the connected mode. The control module 24 may then be operable to end the time interval when transiting the mobile transceiver 100 from the active or connected mode to the idle mode, during radio link failure (e.g. after corresponding timer expiry), respectively.

In another embodiment, when the UE 100 is back in good coverage while still in RRC-connected (e.g. before radio link failure timer expiry), it may again request the transmission resource pool configured by the eNB 200, if they have been released upon loss of coverage. The network may continue to maintain the resource for D2D at least for as long as it is sure that the UE has not released the resources, e.g. until the radio link failure timers in the network expire and the active connection to the UE is released on the network side 200. That is to say that in some embodiments the control module 14 is further operable to provide information related to a request for the temporary radio resources to the base station transceiver 200 before receiving the configuration information relating to the temporary set of radio resources for communication with the other mobile transceiver 300 from the base station transceiver 200. Accordingly, if the temporary set gets released due to radio link failure, transition to idle mode, or any other reason, the UE 100 may re-request such resources. The control module 24 on the eNB 200 side may be further operable to receive information related to a request for the temporary radio resources from the mobile transceiver 100 before providing the configuration information relating to the temporary set of radio resources for communication with the other mobile transceiver 300 to the mobile transceiver 100.

In the case where the UE 100 is out of coverage, it will enter RRC-idle mode as per current specifications and the UE 100 may release the transmission resource pool configuration provided by the network 200 in some embodiments. The UE 100 may then use the predefined or quasi-stationary pool, if it is preconfigured with one. When the UE 100 is back in coverage, it may enter RRC-connected mode to receive the configuration information on the temporary transmission resource pool configured by the eNB 200.

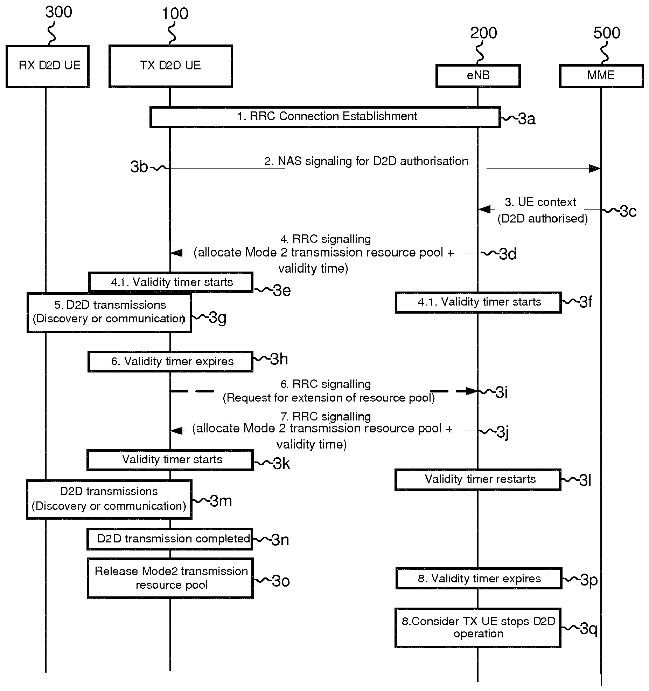

Fig. 3 illustrates another message sequence chart as used in another embodiment. Fig. 3 shows the other mobile transceiver 300 as a D2D receiver UE 300 (RX D2D UE) on the very left. Next to the other UE 300 Fig. 3 shows the mobile transceiver 100 as the D2D transmitting UE 100 (TX D2D UE). Fig. 3 further shows an embodiment of a base station transceiver 200 implemented as eNB 200. The eNB 200 has a further connection to an MME 500. In a first step 3a RRC connection is established between the mobile transceiver 100 and the eNB 200. In step 3b Non Access Stratum (NAS) signaling is used for authorizing the UE 100 for D2D communication with MME 500. The MME 500 then authorizes D2D for the UE 100 to the eNB 200 in step 3c. The eNB200 then uses RRC signaling to allocate the mode 2 transmission resource pool (temporary set of radio resources) to the UE 100. One difference compared to the above embodiment described in Fig. 2 is that the eNB 200 now includes information on a validity time or duration in the configuration information such that both the UE 100 and eNB 200 may start a validity timer, which is illustrated in Fig. 3 in step 3e on the UE100 side and in step 3f on the eNB 200 side. It is to be noted that the validity timer may be started later or set a to longer time interval on the eNB 200 side, earlier or set to a shorter time interval on the UE 100 side, respectively.

The UE 100 then uses said resources for communicating with the other UE 300 in step 3g. The connection with the other UE 300 may be established in the above described manner. In the present embodiment the validity timer expires on the UE 100 side first in step 3h. Thereafter the UE 100 uses RRC signaling to request an extension of the temporary resource pool in step 3i. That is to say that in some embodiments the control module 14 on the UE 100 side is further operable to provide information related to a request for extending the use of the temporary radio resources to the base station transceiver 200 before the time interval ends, in case the communication session with the other UE 300 exceeds the time interval. Accordingly, the control module 24 on the eNB 200 side is further operable to receive information related to a request for extending the use of the temporary radio resources from the mobile transceiver 100.

The eNB 200 then allocates mode 2 transmission resources and a new validity time in step 3j, whereupon both the UE 100 and the eNB 200 start new validity timers in the same manner as above in steps 3k and 31. The UE 100 then continues or restarts the D2D transmissions with the other UE 300 in line with the above in step 3m. Once the D2D transmissions are completed in step 3n the UE 100 releases the temporary mode 2 transmission resource pool in step 3o. The validity timer expires on the eNB 200 side in step 3p, upon which the eNB 200 considers the D2D operations of the UE 100 as stopped in step 3q and upon which the eNB 200 may release the temporary resources as well.

In short the diagram of Fig. 3 shows an example signaling flow of an embodiment:
Step 3a: UE 100 enters RRC-connected mode via RRC Connection Establishment procedure,
Step 3b: UE 100 NAS sends a NAS signaling (D2D authorization) to the MME/CN 500,
Step 3c: MME/CN 500 sends the authorization information to the eNB 200,
Step 3d: eNB 200 configures the temporary mode 2 transmission resource pool to the UE 100 with a validity time value,
Step 3e, 3f, 3g: Validity timers are started, UE 100 performs D2D operation,
Step 3h: Once the validity timer expires, if the UE 100 still needs to continue D2D operation, it needs to get eNB 200 permission to use the resources by sending a request via RRC to the eNB 200,
Step 3i, 3j: In response, the eNB 200 may grant the request and/or update the temporary mode 2 transmission resource pool with existing or updated validity time,
Step 3p, 3q: If no further request is received after the validity timer expires, the eNB 200 considers the UE 100 no longer needs to perform D2D operation and releases the temporary transmission resource pool configuration implicitly or explicitly.

In this embodiment the eNB 200 configures the temporary mode 2 transmission resource pool with a validity time. The UE 100 configured with the temporary mode 2 transmission pool may only use the resources in the pool for the validity time. Once validity expires and if UE 100 requires further usage, it may further request permission to use the mode 2 transmission resource pool, e.g. before expiration of the validity time. If no further request is made, the eNB 200 may assume that the UE 100 no longer needs to perform D2D operation and may send the UE 100 in idle mode.

In the case where the UE 100 is in bad coverage and cannot guarantee communication with the network 200, e.g. radio link failure, the UE 100 may release the transmission resource pool configuration provided by the network 200 on expiry of the validity time and use the predefined/quasi-stationary pool (if it is preconfigured with one). After this point in time, if it is back in good coverage while still in RRC-connected, it may again request the transmission resource pool configured by the eNB. The network continues to maintain the resource for D2D for the period of the validity timer.

In the case where UE is out of coverage and in RRC-Idle, the UE continues to use the transmission resource pool configuration provided by the eNB while the validity timer is running. When the validity timer expires and UE is still out of coverage, the UE should release the transmission resource pool configuration provided in coverage and use the predefined pool (if it is preconfigured with one). In other words the control module 14 on the UE 100 side is operable to end the time interval after the duration independent from transiting from the active or connected mode to the idle mode and/or independent from a connection context between the mobile transceiver 100 and the base station transceiver 200. Correspondingly, the control module 24 on the eNB 200 side may be operable to end the time interval independent from the UE 100 transiting from the active or connected mode to the idle mode and/or independent from a connection context between the mobile transceiver 100 and the base station transceiver 200. In other words, in some embodiments the UE 100 may be allowed using the assigned resources for the period of the validity timer even if the network released the RRC Connection of the UE 100 irrespective of whether the UE 100 is in coverage or not.

In another embodiment a UE 100 that wants to perform D2D operation may also provide the time required to perform D2D. In other words the control modules 14 and 24 may be further operable to provide/receive information related to a duration of a communication session between the mobile transceiver 100 and the other mobile transceiver 300, and the control modules 14 and 24 may be operable to end or set the validity timer for the time interval based on the end of the communication session. eNB 200 may then decide the validity based on this and also the cellular load and the D2D load in the transmission resource pool.

In another embodiment the validity timer may be used but the UE 100 may still send an indication to inform that D2D operation has stopped as in the above embodiment even when the validity time is still running.

Embodiments may provide mechanisms to keep track of D2D activity on D2D UEs 100 using temporary mode 2 transmission resource pools while a UE 100 is in connected mode.

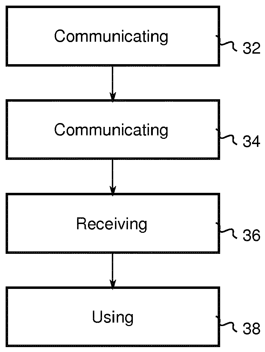

Fig. 4 shows a block diagram of a flow chart of an embodiment of a method for a mobile transceiver 100 of a mobile communication system 400. The method comprises communicating 32 with another mobile transceiver 300 and communicating 34 with a base station transceiver 200. The method further comprises receiving 36 configuration information relating to a temporary set of radio resources for communication with the other mobile transceiver 300 from the base station transceiver 200. The temporary set of radio resources is valid during a limited time interval. The method further comprises using 38 at least a subset of the temporary set of radio resources to communicate with the other mobile transceiver 300 during the time interval.

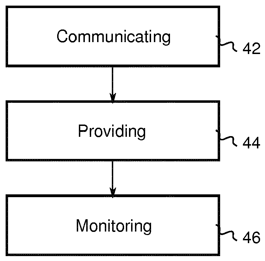

Fig. 5 shows a block diagram of a flow chart of an embodiment of a method for a base station transceiver 200 of a mobile communication system 400. The method comprises communicating 42 with a mobile transceiver 100. The method further comprises providing 44 configuration information relating to a temporary set of radio resources for communication between the mobile transceiver 100 and another mobile transceiver 300. The temporary set of radio resources is valid during a limited time interval. The method further comprises monitoring 46 the limited time interval.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.
The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.
Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).
The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.
Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended.

It is further to be noted that methods disclosed in the specification or in the claims may be implemented by a device having means for performing each of the respective steps of these methods.

## Claims

1. An apparatus (10) operable in a mobile transceiver (100) of a mobile communication system (400), the apparatus (10) comprising
a transceiver module (12) operable to communicate with another mobile transceiver (300) and with a base station transceiver (200); and
a control module (14) operable to:
control the transceiver module (12),
receive configuration information on a predefined pool of a quasi-stationary set of radio resources;
receive configuration information relating to a temporary set of radio resources for communication with the other mobile transceiver (300) from the base station transceiver (200), the temporary set of radio resources being valid during a limited time interval, and
configure the transceiver module (12) to use at least a subset of the temporary set of radio resources to communicate with the other mobile transceiver (300), **characterized in that** the control module is further operable to: detect
a radio link failure between the mobile transceiver (100) and the base station transceiver (200) during the time interval,
following the detection, release the temporary set of radio resources, end the limited time interval, and use the predefined pool of quasi-stationary set of radio resources for communication with the other mobile transceiver (100).

2. The apparatus (10) of claim 1, wherein the control module (14) is further operable to receive information related to a beginning, a duration and/or an end of the time interval from the base station transceiver (200).

3. The apparatus (10) of claim 1, wherein the control module (14) is further operable to operate the apparatus (10) in an idle mode, in which there is no active communication context configured between the mobile transceiver (100) and the base station transceiver (200), and in a connected mode, in which there is an active communication context configured between the mobile transceiver (100) and the base station transceiver (200), and wherein the control module (14) is operable to
end the time interval when transiting from the connected mode to the idle mode, or
end the time interval independent from transiting from the connected mode to the idle mode and/or independent from a connection context between the mobile transceiver (100) and the base station transceiver (200).

4. The apparatus (10) of claim 1, wherein the control module (14) is further operable to control a time limited communication session with the other mobile transceiver (300), and wherein the control module (14) is operable to provide information related to an end and/or a duration of the communication session to the base station transceiver (200) and wherein the control module (14) is operable to end the time interval based on the end of the communication session or based on an indication from the base station transceiver (200) in response to the information related to the end of the communication session.

5. The apparatus (10) of the previous claim, wherein the control module (14) is further operable to provide information related to a request for extending the use of the temporary radio resources to the base station transceiver (200) before the time interval ends, in case the communication session exceeds the time interval.

6. The apparatus (10) of claim 1, wherein the control module (14) is further operable to provide information related to a request for the temporary radio resources to the base station transceiver (200) before receiving the configuration information relating to the temporary set of radio resources for communication with the other mobile transceiver (300) from the base station transceiver (200).

7. The apparatus (10) of claim 1, wherein the control module (14) is operable to configure the transceiver module (12) to use at least a subset of the quasi-stationary set of radio resources to communicate with the other mobile transceiver (300) before, during or after the time interval.

8. An apparatus (20) operable in a base station transceiver (200) of a mobile communication system (400), the apparatus (20) comprising
a transceiver module (22) operable to communicate with a mobile transceiver (100); and
a control module (24) operable to:
control the transceiver module (22),
provide configuration information on a predefined pool of quasi-stationary set of radio resources for mobile transceiver to mobile transceiver communications;
provide configuration information relating to a temporary set of radio resources for communication between the mobile transceiver (100) and another mobile transceiver (300), the temporary set of radio resources being valid during a limited time interval,
monitor the limited time interval, **characterized in that** the control module is further operable to: detect a radio link failure between the mobile transceiver (100) and the base station transceiver (200) during the time interval,
maintain the temporary set of radio resources until expiry of a radio link failure timer; and
release the temporary set of radio resources after expiry of the radio link failure timer or the limited time interval.

9. The apparatus (20) of claim 8, wherein the control module (24) is further operable to provide information related to a beginning, a duration and/or an end of the time interval to the mobile transceiver (100) or wherein the control module (24) is further operable to receive information related to an end and/or a duration of a communication session between the mobile transceiver (100) and another mobile transceiver (300) from the mobile transceiver (100) and to end the time interval based on the end of the communication session.

10. The apparatus (20) of claim 8, wherein the control module (24) is further operable to operate the mobile transceiver (100) in an idle mode, in which there is no active communication context configured between the mobile transceiver (100) and the base station transceiver (200), and in a connected mode, in which there is an active communication context configured between the mobile transceiver (100) and the base station transceiver (200), and wherein the control module (24) is operable to
end the time interval when transiting the mobile transceiver (100) from the connected mode to the idle mode; or
end the time interval after the duration independent from transiting from the connected mode to the idle mode and/or independent from a connection context between the mobile transceiver (100) and the base station transceiver (200).

11. The apparatus (20) of claim 8, wherein the control module (24) is further operable to receive information related to a request for extending the use of the temporary radio resources from the mobile transceiver (100), and/or wherein the control module (24) is further operable to receive information related to a request for the temporary radio resources from the mobile transceiver (100) before providing the configuration information relating to the temporary set of radio resources for communication with the other mobile transceiver (300) to the mobile transceiver (100).

12. The apparatus (20) of claim 8, wherein the control module (24) is further operable to provide information related to the quasi-stationary set of radio resources to the mobile transceiver (100) for communicating with the other mobile transceiver (300) before, during or after the time interval.

13. A method for device-to-device communications, D2D, of a mobile transceiver (100) of a mobile communication system (400), the method comprising
communicating (32) with another mobile transceiver (300);
communicating (34) with a base station transceiver (200);
receiving configuration information on a predefined pool of a quasi-stationary set of radio resources;
receiving (36) configuration information relating to a temporary set of radio resources for communication with the other mobile transceiver (300) from the base station transceiver (200), the temporary set of radio resources being valid during a limited time interval;
using (38) at least a subset of the temporary set of radio resources to communicate with the other mobile transceiver (300); **characterized by**:
detecting a radio link failure between the mobile transceiver (100) and the base station transceiver (200) during the time interval; and
following to the detection, releasing the temporary set of radio resources, ending the limited time interval, and using the predefined pool of quasi-stationary set of radio resources for communication with the other mobile transceiver (300).

14. A method for configuring device-to-device, D2D, communications at a base station transceiver (200) of a mobile communication system (400), the method comprising
communicating (42) with a mobile transceiver (100);
providing configuration information on a predefined pool of quasi-stationary set of radio resources for mobile transceiver to mobile transceiver communications; providing (44) configuration information relating to a temporary set of radio resources for communication between the mobile transceiver (100) and another mobile transceiver (300), the temporary set of radio resources being valid during a limited time interval;
monitoring (46) the limited time interval; **characterized by**:
detecting a radio link failure between the mobile transceiver (100) and the base station transceiver (200) during the time interval,
maintaining the temporary set of radio resources until expiry of a radio link failure timer;
and releasing the temporary set of radio resources after expiry of the radio link failure timer or the limited time interval.

15. A computer program having a program code for performing at least one of the methods of claims 13 and 14, when the computer program is executed on a computer, a processor, or a programmable hardware component.

## Patentansprüche

1. Vorrichtung (10), betreibbar in einem mobilen Transceiver (100) eines mobilen Kommunikationssystems (400), wobei die Vorrichtung (10) umfasst:
ein Transceiver-Modul (12), betreibbar zum Kommunizieren mit einem anderen mobilen Transceiver (300) und mit einem Basisstation-Transceiver (200); und
ein Kontrollmodul (14), betreibbar zum:
Kontrollieren des Transceiver-Moduls (12),
Empfangen von Konfigurationsinformation über einen vordefinierten Pool eines quasi-stationären Satzes von Funkressourcen;
Empfangen von Konfigurationsinformation in Bezug auf einen temporären Satz von Funkressourcen für die Kommunikation mit dem anderen mobilen Transceiver (300) von dem Basisstation-Transceiver (200), wobei der temporäre Satz von Funkressourcen gültig ist während eines begrenzten Zeitintervalls, und
Konfigurieren des Transceiver-Moduls (12) zum Verwenden mindestens eines Teilsatzes des temporären Satzes von Funkressourcen zum Kommunizieren mit dem anderen mobilen Transceiver (300),
**dadurch gekennzeichnet, dass** das Kontrollmodul weiterhin betreibbar ist:
zum Erkennen eines Funkverbindungsfehlers zwischen dem mobilen Transceiver (100) und dem Basisstation-Transceiver (200) während des Zeitintervalls,
nach dem Erkennen, zum Freigeben des temporären Satzes von Funkressourcen, zum Beenden des begrenzten Zeitintervalls und zum Verwenden des vordefinierten Pools von quasi-stationären Sätzen von Funkressourcen für die Kommunikation mit dem anderen mobilen Transceiver (100).

2. Vorrichtung (10) nach Anspruch 1, wobei das Kontrollmodul (14) weiterhin betreibbar ist zum Empfangen von Information in Bezug auf einen Beginn, eine Dauer und/oder ein Ende des Zeitintervalls von dem Basisstation-Transceiver (200).

3. Vorrichtung (10) nach Anspruch 1, wobei das Kontrollmodul (14) weiterhin betreibbar ist zum Betreiben der Vorrichtung (10) in einem Ruhemodus, in welchem kein aktiver Kommunikationskontext konfiguriert ist zwischen dem mobilen Transceiver (100) und dem Basisstation-Transceiver (200), und in einem Verbindungsmodus, in welchem ein aktiver Kommunikationskontext konfiguriert ist zwischen dem mobilen Transceiver (100) und dem Basisstation-Transceiver (200) und wobei das Kontrollmodul (14) betreibbar ist
zum Beenden des Zeitintervalls, wenn vom Verbindungsmodus zum Ruhemodus umgeschaltet wird, oder
zum Beenden des Zeitintervalls, unabhängig von vom Umschalten vom Verbindungsmodus zum Ruhemodus und/oder unabhängig von einem Verbindungskontext zwischen dem mobilen Transceiver (100) und dem Basisstation-Transceiver (200).

4. Vorrichtung (10) nach Anspruch 1, wobei das Kontrollmodul (14) weiterhin betreibbar ist zum Kontrollieren einer zeitbegrenzten Kommunikationssitzung mit dem anderen mobilen Transceiver (300) und wobei das Kontrollmodul (14) betreibbar ist zum Bereitstellen von Information, die mit einem Ende und/oder einer Dauer der Kommunikationssitzung mit dem Basisstation-Transceiver (200) verbunden ist, und wobei das Kontrollmodul (14) betreibbar ist zum Beenden der Zeitintervalls auf Grundlage des Endes der Kommunikationssitzung oder auf Grundlage eine Anzeige von dem Basisstation-Transceiver (200) als Antwort auf die Information, die mit dem Ende der Kommunikationssitzung verbunden ist.

5. Vorrichtung (10) des vorherigen Anspruchs, wobei das Kontrollmodul (14) weiterhin betreibbar ist zum Bereitstellen von Information in Bezug auf ein Anfordern der Ausweitung der Verwendung der temporären Funkressourcen bei dem Basisstation-Transceiver (200), bevor das Zeitintervall endet in dem Fall, dass die Kommunikationssitzung das Zeitintervall überschreitet.

6. Vorrichtung (10) nach Anspruch 1, wobei das Kontrollmodul (14) weiterhin betreibbar ist zum Bereitstellen von Information, die verbunden ist mit einer Anforderung für die temporären Funkressourcen bei dem Basisstation-Transceiver (200), bevor die Konfigurationsinformation, die sich auf den temporären Satz von Funkressourcen für die Kommunikation mit dem anderen mobilen Transceiver (300) bezieht, von dem Basisstation-Transceiver (200) empfangen wird.

7. Vorrichtung (10) nach Anspruch 1, wobei das Kontrollmodul (14) betreibbar ist zum Konfigurieren des Transceiver-Moduls (12) zum Verwenden mindestens eines Teilsatzes des quasi-stationären Satzes von Funkressourcen zum Kommunizieren mit dem anderen mobilen Transceiver (300) vor, während oder nach dem Zeitintervall.

8. Vorrichtung (20), betreibbar in einem Basisstation-Transceiver (200) eines mobilen Kommunikationssystems (400), wobei die Vorrichtung (20) umfasst ein Transceiver-Modul (22), betreibbar zum Kommunizieren mit einem mobilen Transceiver (100); und
ein Kontrollmodul (24), betreibbar zum:
Kontrollieren des Transceiver-Moduls (22),
Bereitstellen von Konfigurationsinformation über einen vordefinierten Pool von quasi-stationären Sätzen von Funkressourcen für Kommunikationen zwischen einem mobilen Transceiver und einem mobilen Transceiver;
Bereitstellen von Konfigurationsinformation, die sich auf einen temporären Satz von Funkressourcen für die Kommunikation zwischen dem mobilen Transceiver (100) und einem anderen mobilen Transceiver (300) bezieht, wobei der temporäre Satz von Funkressourcen gültig ist während eines begrenzten Zeitintervalls,
Überwachen des begrenzten Zeitintervalls,
**dadurch gekennzeichnet, dass** das Kontrollmodul weiterhin betreibbar ist zum:
Erkennen eines Funkverbindungsfehlers zwischen dem mobilen Transceiver (100) und dem Basisstation-Transceiver (200) während des Zeitintervalls,
Bewahren des temporären Satzes von Funkressourcen bis zum Ablauf eines Funkverbindungsfehler-Timers; und
Freigeben des temporären Satzes von Funkressourcen nach dem Ablauf des Funkverbindungsfehler-Timers oder des begrenzten Zeitintervalls.

9. Vorrichtung (20) nach Anspruch 8, wobei das Kontrollmodul (24) weiterhin betreibbar ist zum Bereitstellen von Information, die sich auf einen Beginn, einer Dauer und/oder ein Ende des Zeitintervalls bezieht, für den mobilen Transceiver (100) oder wobei das Kontrollmodul (24) weiterhin betreibbar ist zum Empfangen von Information, die sich auf ein Ende und/oder auf eine Dauer einer Kommunikationssitzung zwischen dem mobilen Transceiver (100) und einem anderen mobilen Transceiver (300) bezieht, von dem mobilen Transceiver (100) und zum Beenden des Zeitintervalls auf Grundlage des Endes der Kommunikationssitzung.

10. Vorrichtung (20) nach Anspruch 8, wobei das Kontrollmodul (24) weiterhin betreibbar ist zum Betreiben des mobilen Transceivers (100) in einem Ruhemodus, in welchem kein aktiver Kommunikationskontext zwischen dem mobilen Transceiver (100) und dem Basisstation-Transceiver (200) konfiguriert ist, und in einem Kontextmodus, in welchem ein aktiver Kommunikationskontext konfiguriert ist zwischen dem mobilen Transceiver (100) und dem Basisstation-Transceiver (200) und wobei das Kontrollmodul (24) betreibbar ist
zum Beenden des Zeitintervalls, wenn der mobile Transceiver (100) von dem Verbindungsmodus in den Ruhemodus umschaltet; oder
zum Beenden des Zeitintervalls nach der Dauer, unabhängig vom Umschalten vom Verbindungsmodus in den Ruhemodus und/oder unabhängig von einem Verbindungskontext zwischen dem mobilen Transceiver (100) und dem Basisstation-Transceiver (200).

11. Vorrichtung (20) nach Anspruch 8, wobei das Kontrollmodul (24) weiterhin betreibbar ist zum Empfangen von Information, welche mit einer Anforderung zum Ausweiten der Verwendung der temporären Funkressourcen verbunden ist, von dem mobilen Transceiver (100), und/oder wobei das Kontrollmodul (24) weiterhin betreibbar ist zum Empfangen von Information, welche mit einer Anforderung für die temporären Funkressourcen verbunden ist, von dem mobilen Transceiver (100), bevor die Konfigurationsinformation, die mit dem temporären Satz von Funkressourcen verbunden ist, für die Kommunikation mit dem anderen mobilen Transceiver (300) für den mobilen Transceiver (100) bereitgestellt wird.

12. Vorrichtung (20) nach Anspruch 8, wobei das Kontrollmodul (24) weiterhin betreibbar ist zum Bereitstellen von Information, die verbunden ist mit dem quasi-stationären Satz von Funkressourcen für den mobilen Transceiver (100) für die Kommunikation mit dem anderen mobilen Transceiver (300) vor, während und nach dem Zeitintervall.

13. Verfahren zum Konfigurieren von D2D-Kommunikationen (Device-to-Device) eines mobilen Transceiver (100) eines mobilen Kommunikationssystems (400), wobei das Verfahren umfasst
Kommunizieren (32) mit einem anderen mobilen Transceiver (300); Kommunizieren (34) mit einem Basisstation-Transceiver (200);
Empfangen von Konfigurationsinformation über einen vordefinierten Pool eines quasi-stationären Satzes von Funkressourcen;
Empfangen (36) von Konfigurationsinformation in Bezug auf einen temporären Satz von Funkressourcen für die Kommunikation mit dem anderen mobilen Transceiver (300) von dem Basisstation-Transceiver (200), wobei der temporäre Satz von Funkressourcen gültig ist während eines begrenzten Zeitintervalls;
Verwenden (38) mindestens eines Teilsatzes des temporären Satzes von Funkressourcen zum Kommunizieren mit dem anderen mobilen Transceiver (300); **gekennzeichnet durch**:
Erkennen eines Funkverbindungsfehlers zwischen dem mobilen Transceiver (100) und dem Basisstation-Transceiver (200) während des Zeitintervalls; und
nach dem Erkennen, zum Freigeben des temporären Satzes von Funkressourcen, zum Beenden des begrenzten Zeitintervalls und Verwenden des vordefinierten Pools von quasi-stationären Sätzen von Funkressourcen für die Kommunikation mit dem anderen mobilen Transceiver (300).

14. Verfahren zum Konfigurieren von D2D-Kommunikationen (Device-to-Device) an einem Basisstation-Transceiver (200) eines mobilen Kommunikationssystems (400), wobei das Verfahren umfasst
das Kommunizieren (42) mit einem mobilen Transceiver (100);
Bereitstellen von Konfigurationsinformation über einen vordefinierten Pool von quasi-stationären Sätzen von Funkressourcen für Kommunikationen zwischen einem mobilen Transceiver und einem mobilen Transceiver;
das Bereitstellen (44) von Konfigurationsinformation, die sich auf einen temporären Satz von Funkressourcen für die Kommunikation zwischen dem mobilen Transceiver (100) und einem anderen mobilen Transceiver (300) bezieht, wobei der temporäre Satz von Funkressourcen gültig ist während eines begrenzten Zeitintervalls;
das Überwachen (46) des begrenzten Zeitintervalls;
**gekennzeichnet durch**:
Erkennen eines Funkverbindungsfehlers zwischen dem mobilen Transceiver (100) und dem Basisstation-Transceiver (200) während des Zeitintervalls,
Bewahren des temporären Satzes von Funkressourcen bis zum Ablauf eines Funkverbindungsfehler-Timers; und
Freigeben des temporären Satzes von Funkressourcen nach dem Ablauf des Funkverbindungsfehler-Timers oder des begrenzten Zeitintervalls.

15. Computerprogramm mit einem Programmcode zum Durchführen mindestens eines der Verfahren nach den Ansprüchen 13 und 14, wenn das Computerprogramm auf einem Computer, Prozessor oder auf programmierbarer Hardware ausgeführt wird.

## Revendications

1. Appareil (10) pouvant fonctionner dans un émetteur/récepteur mobile (100) d'un système de communication mobile (400), l'appareil (10) comprenant
un module émetteur/récepteur (12) permettant de communiquer avec un autre émetteur/récepteur mobile (300) et avec un émetteur/récepteur de station de base (200) ; et
un module de commande (14) permettant de :
commander le module émetteur/récepteur (12),
recevoir des informations de configuration sur un groupe prédéfini d'un ensemble quasi-stationnaire de ressources radio ;
recevoir des informations de configuration relatives à un ensemble temporaire de ressources radio pour communiquer avec l'autre émetteur/récepteur mobile (300) provenant de l'émetteur/récepteur de station de base (200), l'ensemble temporaire de ressources radio étant valide durant un intervalle de temps limité, et
configurer le module émetteur/récepteur (12) pour utiliser au moins un sous-ensemble de l'ensemble temporaire de ressources radio pour communiquer avec l'autre émetteur/récepteur mobile (300),
**caractérisé en ce que** le module de commande permet en outre de :
détecter un échec de liaison radio entre l'émetteur/récepteur mobile (100) et l'émetteur/récepteur de station de base (200) durant l'intervalle de temps, suite à la détection, libérer l'ensemble temporaire de ressources radio, interrompre l'intervalle de temps limité, et utiliser le groupe prédéfini d'ensemble quasi-stationnaire de ressources radio pour communiquer avec l'autre émetteur/récepteur mobile (100).

2. Appareil (10) selon la revendication 1, dans lequel le module de commande (14) permet en outre de recevoir des informations, relatives à un début, une durée et/ou une fin de l'intervalle de temps, provenant de l'émetteur/récepteur de station de base (200).

3. Appareil (10) selon la revendication 1, dans lequel le module de commande (14) permet en outre de faire fonctionner l'appareil (10) en mode de veille, dans lequel il n'y a pas de contexte de communication active configuré entre l'émetteur/récepteur mobile (100) et l'émetteur/récepteur de station de base (200), et en mode connecté, dans lequel il y a un contexte de communication active configuré entre l'émetteur/récepteur mobile (100) et l'émetteur/récepteur de station de base (200), et dans lequel le module de commande (14) permet
d'interrompre l'intervalle de temps lorsque l'on passe du mode connecté au mode de veille, ou
d'interrompre l'intervalle de temps que l'on passe ou non du mode connecté au mode de veille et/ou quel que soit le contexte de connexion entre l'émetteur/récepteur mobile (100) et l'émetteur/récepteur de station de base (200).

4. Appareil (10) selon la revendication 1, dans lequel le module de commande (14) permet en outre de commander une session de communication limitée dans le temps avec l'autre émetteur/récepteur mobile (300), et dans lequel le module de commande (14) permet de fournir des informations relatives à une fin et/ou à une durée de la session de communication à l'émetteur/récepteur de station de base (200) et dans lequel le module de commande (14) permet d'interrompre l'intervalle de temps sur la base de la fin de la session de communication ou sur la base d'une indication de l'émetteur/récepteur de station de base (200) en réponse aux informations relatives à la fin de la session de communication.

5. Appareil (10) selon la revendication précédente, dans lequel le module de commande (14) permet en outre de fournir des informations relatives à une demande d'extension de l'utilisation des ressources radio temporaires à l'émetteur/récepteur de station de base (200) avant que l'intervalle de temps se termine, au cas où la session de communication session dépasserait l'intervalle de temps.

6. Appareil (10) selon la revendication 1, dans lequel le module de commande (14) permet en outre de fournir des informations relatives à une demande de ressources radio temporaires à l'émetteur/récepteur de station de base (200) avant de recevoir les informations de configuration relatives à l'ensemble temporaire de ressources radio pour communiquer avec l'autre émetteur/récepteur mobile (300) provenant de l'émetteur/récepteur de station de base (200).

7. Appareil (10) selon la revendication 1, dans lequel le module de commande (14) permet de configurer le module émetteur/récepteur (12) pour utiliser au moins un sous-ensemble de l'ensemble quasi-stationnaire de ressources radio pour communiquer avec l'autre émetteur/récepteur mobile (300) avant, pendant ou après l'intervalle de temps.

8. Appareil (20) pouvant fonctionner dans un émetteur/récepteur de station de base (200) d'un système de communication mobile (400), l'appareil (20) comprenant
un module émetteur/récepteur (22) permettant de communiquer avec un émetteur/récepteur mobile (100) ; et
un module de commande (24) permettant de :
commander le module émetteur/récepteur (22),
fournir des informations de configuration sur un groupe prédéfini d'un ensemble quasi-stationnaire de ressources radio pour des communications entre deux émetteurs/récepteurs mobiles ;
fournir des informations de configuration relatives à un ensemble temporaire de ressources radio pour communiquer entre l'émetteur/récepteur mobile (100) et un autre émetteur/récepteur mobile (300), l'ensemble temporaire de ressources radio étant valide durant un intervalle de temps limité,
surveiller l'intervalle de temps limité,
**caractérisé en ce que** le module de commande permet en outre de :
détecter un échec de liaison radio entre l'émetteur/récepteur mobile (100) et l'émetteur/récepteur de station de base (200) durant l'intervalle de temps,
conserver l'ensemble temporaire de ressources radio jusqu'à l'expiration d'un temporisateur d'échec de liaison radio ; et
libérer l'ensemble temporaire de ressources radio après l'expiration du temporisateur d'échec de liaison radio ou de l'intervalle de temps limité.

9. Appareil (20) selon la revendication 8, dans lequel le module de commande (24) permet en outre de fournir des informations relatives à un début, à une durée et/ou à une fin de l'intervalle de temps à l'émetteur/récepteur mobile (100) ou dans lequel le module de commande (24) permet en outre de recevoir des informations relatives à une fin et/ou à une durée d'une session de communication entre l'émetteur/récepteur mobile (100) et un autre émetteur/récepteur mobile (300) provenant de l'émetteur/récepteur mobile (100) et d'interrompre l'intervalle de temps sur la base de la fin de la session de communication.

10. Appareil (20) selon la revendication 8, dans lequel le module de commande (24) permet en outre de faire fonctionner l'émetteur/récepteur mobile (10) en mode de veille, dans lequel il n'y a pas de contexte de communication active configuré entre l'émetteur/récepteur mobile (100) et l'émetteur/récepteur de station de base (200), et en mode connecté, dans lequel il y a un contexte de communication active configuré entre l'émetteur/récepteur mobile (100) et l'émetteur/récepteur de station de base (200), et dans lequel le module de commande (24) permet
d'interrompre l'intervalle de temps lorsque l'on fait passer l'émetteur/récepteur mobile (100) du mode connecté au mode de veille ; ou
d'interrompre l'intervalle de temps après la durée que l'on passe ou non du mode connecté au mode de veille et/ou quel que soit le contexte de connexion entre l'émetteur/récepteur mobile (100) et l'émetteur/récepteur de station de base (200).

11. Appareil (20) selon la revendication 8, dans lequel le module de commande (24) permet en outre de recevoir des informations relatives à une demande d'extension de l'utilisation des ressources radio temporaires provenant de l'émetteur/récepteur mobile (100), et/ou dans lequel le module de commande (24) permet en outre de recevoir des informations relatives à une demande de ressources radio temporaires provenant de l'émetteur/récepteur mobile (100) avant de fournir les informations de configuration relatives à l'ensemble temporaire de ressources radio pour communiquer avec l'autre émetteur/récepteur mobile (300) à l'émetteur/récepteur mobile (100).

12. Appareil (20) selon la revendication 8, dans lequel le module de commande (24) permet en outre de fournir des informations relatives à l'ensemble quasi-stationnaire de ressources radio à l'émetteur/récepteur mobile (100) pour communiquer avec l'autre émetteur/récepteur mobile (300) avant, pendant ou après l'intervalle de temps.

13. Procédé pour des communications de dispositif à dispositif, D2D, d'un émetteur/récepteur mobile (100) d'un système de communication mobile (400), le procédé comprenant les étapes suivantes
communiquer (32) avec un autre émetteur/récepteur mobile (300) ;
communiquer (34) avec un émetteur/récepteur de station de base (200) ;
recevoir des informations de configuration sur un groupe prédéfini d'un ensemble quasi-stationnaire de ressources radio ;
recevoir (36) des informations de configuration relatives à un ensemble temporaire de ressources radio pour communiquer avec l'autre émetteur/récepteur mobile (300) provenant de l'émetteur/récepteur de station de base (200), l'ensemble temporaire de ressources radio étant valide durant un intervalle de temps limité ;
utiliser (38) au moins un sous-ensemble de l'ensemble temporaire de ressources radio pour communiquer avec l'autre émetteur/récepteur mobile (300) ;
**caractérisé par** les étapes suivantes :
détecter un échec de liaison radio entre l'émetteur/récepteur mobile (100) et l'émetteur/récepteur de station de base (200) durant l'intervalle de temps ; et
suite à la detection, libérer l'ensemble temporaire de ressources radio, interrompre l'intervalle de temps limité, et utiliser le groupe prédéfini d'ensemble quasi-stationnaire de ressources radio pour communiquer avec l'autre émetteur/récepteur mobile (300).

14. Procédé pour configurer des communications de dispositif à dispositif, D2D, au niveau d'un émetteur/récepteur de station de base (200) d'un système de communication mobile (400), le procédé comprenant les étapes suivantes communiquer (42) avec un émetteur/récepteur mobile (100) ;
fournir des informations de configuration sur un groupe prédéfini d'un ensemble quasi-stationnaire de ressources radio pour des communications entre deux émetteurs/récepteurs mobiles ; fournir (44) des informations de configuration relatives à un ensemble temporaire de ressources radio pour communiquer entre l'émetteur/récepteur mobile (100) et un autre émetteur récepteur mobile (300), l'ensemble temporaire de ressources radio étant valide durant un intervalle de temps limité ;
surveiller (46) l'intervalle de temps limité ;
**caractérisé par** les étapes suivantes :
détecter un échec de liaison radio entre l'émetteur/récepteur mobile (100) et l'émetteur/récepteur de station de base (200) durant l'intervalle de temps,
conserver l'ensemble temporaire de ressources radio jusqu'à l'expiration d'un temporisateur d'échec de liaison radio ;
et libérer l'ensemble temporaire de ressources radio après l'expiration du temporisateur d'échec de liaison radio ou de l'intervalle de temps limité.

15. Programme informatique possédant un code de programme pour exécuter au moins un des procédés selon les revendications 13 et 14, lorsque le programme informatique est exécuté sur un ordinateur, un processeur ou un composant matériel programmable.
